# EUROPEAN PATENT SPECIFICATION

(11) **EP 2 579 356 B1**
(45) Date of publication and mention of the grant of the patent: **24.12.2014**
(21) Application number: 11792635.2
(22) Date of filing: 02.06.2011
(51) Int. Cl.: H01M 2/26, H01M 2/30, H01M 2/22, H01M 2/34, B23K 20/16, B23K 1/00, B23K 26/20, H01M 10/04, B23K 1/005

(54) **BATTERY MODULE AND METHODS FOR JOINING A CELL TERMINAL OF A BATTERY TO AN INTERCONNECTION MEMBER**
BATTERIEMODUL UND VERFAHREN ZUM ANSCHLUSS EINER ZELLENKLEMME EINER BATTERIE AN EIN VERNETZUNGSELEMENT
MODULE DE BATTERIE ET PROCÉDÉS D'ASSEMBLAGE D'UNE BORNE D'ÉLÉMENT D'UNE BATTERIE À UN ÉLÉMENT D'INTERCONNEXION

(30) Priority: 07.06.2010 US 794949
(43) Date of publication of application: 10.04.2013
(73) Proprietor: LG Chem. Ltd., Youngdungpo-gu Seoul 150-721 (KR)
(72) Inventor: KHAKHALEV, Alex, Troy, Michigan 48098 (US)
(74) Representative: Cabinet Plasseraud
(86) International application number: PCT/KR2011/004034
(87) International publication number: WO 2011/155724

(56) References cited:
- WO-A1-01/83182
- JP-A- 2009 037 785
- JP-A- 2009 507 345
- KR-A- 20090 095 951
- KR-A- 20100 114 595
- US-A1- 2009 311 607
- US-A1- 2010 038 409

## Description

### BACKGROUND

Battery modules have battery cells with cell terminals that are welded to interconnect devices. However, ultrasonic welding devices have a relatively long cycle time for welding cell terminals to interconnect devices. Further, a welding tool of an ultrasonic welding device must be sequentially moved to each cell of a plurality of cell terminals that takes a relatively large amount of manufacturing time. Further, the welding tool must be allowed to cool between each weld that takes an additional amount of manufacturing time.

Accordingly, the inventors herein have recognized a need for an improved battery module and methods for bonding a cell terminal of a battery module to an interconnect device.

### SUMMARY

A battery module in accordance with an exemplary embodiment is provided. The battery module includes a battery cell having a cell terminal. The battery module further includes an exothermal reactive layer having first and second sides. The first side is disposed adjacent to the cell terminal. The battery module further includes an interconnect member disposed adjacent to the second side of the exothermal reactive layer. The exothermal reactive layer is configured to ignite to form a bonding joint between the interconnect member and the cell terminal in response to a laser beam contacting at least a portion of the exothermal reactive layer.

A method for bonding a cell terminal of a battery to an interconnect member in accordance with another exemplary embodiment is provided. The method includes disposing an exothermal reactive layer between the interconnect member and the cell terminal of the battery cell, utilizing a component placement machine. The method further includes emitting a laser beam from a laser for a predetermined amount of time that contacts at least a portion of the exothermal reactive layer and ignites the exothermal reactive layer to form a bonding joint between the interconnect member and the cell terminal.

A method for bonding a cell terminal of a battery to an interconnect member in accordance with another exemplary embodiment is provided. The method includes disposing the interconnect member having an exothermal reactive layer previously disposed thereon adjacent to the cell terminal utilizing a component placement machine. The method further includes emitting a laser beam from a laser for a predetermined amount of time that contacts at least a portion of the exothermal reactive layer and ignites the exothermal reactive layer to form a bonding joint between the interconnect member and the cell terminal.

A method for bonding a cell terminal of a battery to an interconnect member in accordance with another exemplary embodiment is provided. The method includes disposing the cell terminal having an exothermal reactive layer previously disposed thereon adjacent to the interconnect layer utilizing a component placement machine. The method further includes emitting a laser beam from a laser for a predetermined amount of time that contacts at least a portion of the exothermal reactive layer and ignites the exothermal reactive layer to form a bonding joint between the interconnect member and the cell terminal.

These and other advantages and features will become more apparent from the following description taken in conjunction with the drawings.

### BRIEF DESCRIPTION OF THE DRAWINGS

FIG. 1 is a schematic of a battery module in accordance with an exemplary embodiment;
FIG. 2 is a cross-sectional schematic of a top portion of the battery module of FIG. 1;
FIG. 3 is a schematic of four battery cells and an interconnect member utilized in the battery module of FIG. 1;
FIG. 4 is a cross-sectional schematic of the four battery cells and the interconnect member of FIG. 3;
FIG. 5 is a simplified enlarged cross-sectional schematic of a portion of an interconnect member, an exothermal reactive layer, and a cell terminal in accordance with another exemplary embodiment;
FIG. 6 is a simplified enlarged cross-sectional schematic of a portion of the exothermal reactive layer of FIG. 5;
FIG. 7 is a simplified enlarged cross-sectional schematic of a portion of an interconnect member, an exothermal reactive layer, and a cell terminal in accordance with another exemplary embodiment;
FIG. 8 is a simplified enlarged cross-sectional schematic of a portion of the exothermal reactive layer of FIG. 7;
FIG. 9 is a block diagram of a system utilized to ignite an exothermal reactive layer disposed between a cell terminal and an interconnect member;
FIG. 10 is a flowchart of a method for bonding a cell terminal of the battery to an interconnect member in accordance with another exemplary embodiment;
FIG. 11 is a flowchart of another method for bonding a cell terminal of the battery to an interconnect member in accordance with another exemplary embodiment;
FIG. 12 is a flowchart of another method for bonding a cell terminal of the battery to an interconnect member in accordance with another exemplary embodiment;
FIG. 13 is a simplified enlarged cross-sectional schematic of a portion of an interconnect member, a bonding joint, and a cell terminal wherein the bonding joint is formed by igniting the exothermal reactive layer of FIG. 5 ; and
FIG. 14 is a simplified enlarged cross-sectional view of a portion of an interconnect member, a bonding joint, and a cell terminal wherein the bonding joint is formed by igniting the exothermal reactive layer of FIG. 7.

### DETAILED DESCRIPTION

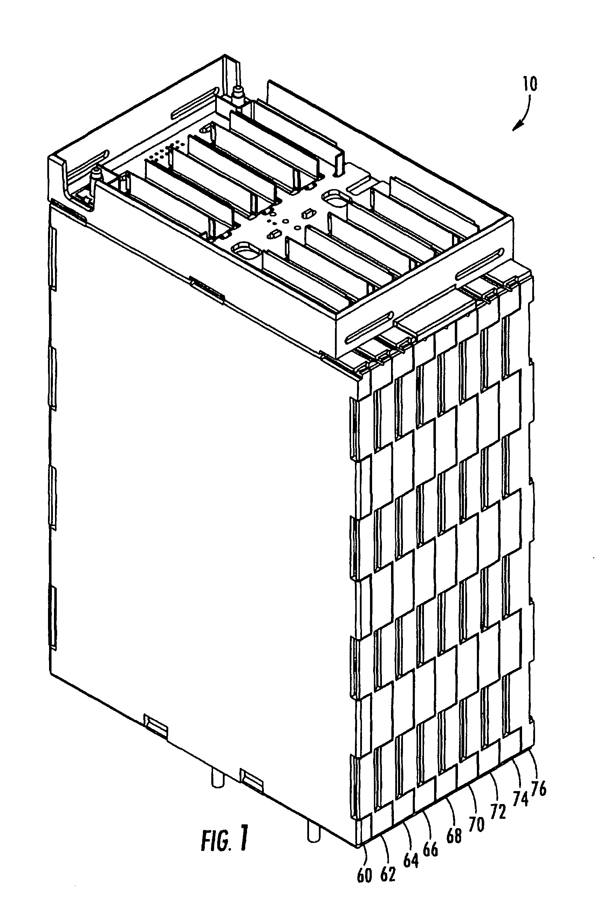

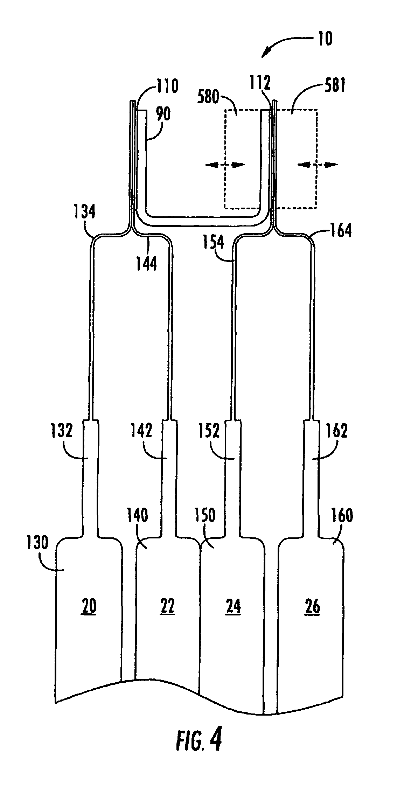

Referring to the FIG. 1, a schematic of a battery module 10 that is configured to provide electrical power to an battery-electric vehicle or a hybrid vehicle in accordance with an exemplary embodiment is illustrated. Referring to FIGS. 1, 2, and 4, the battery module 10 includes battery cells 20, 22, 24, 26, 28, 30, 32, 34, 36, 38, 40, 42, 44, 46, 47, 48, 50, frame members 60, 62, 64, 66, 68, 70, 72, 74, 76, a circuit board 80, interconnect members 90, 92, 94, 96, 97, 98, 100, 102, 103 and exothermal reactive layers including exothermal reactive layers 110, 112. An advantage of the battery module 10 is that the module 10 utilizes exothermal reactive layers that can be ignited utilizing a laser beam during manufacture of the module 10 to bond cell terminals of the battery cells to associated interconnect members extremely quickly. An exothermal reactive layer refers to a layer which generates heat after being ignited.

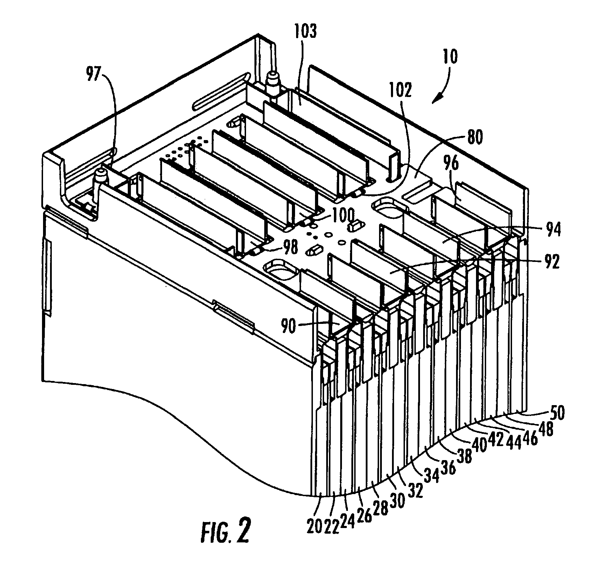

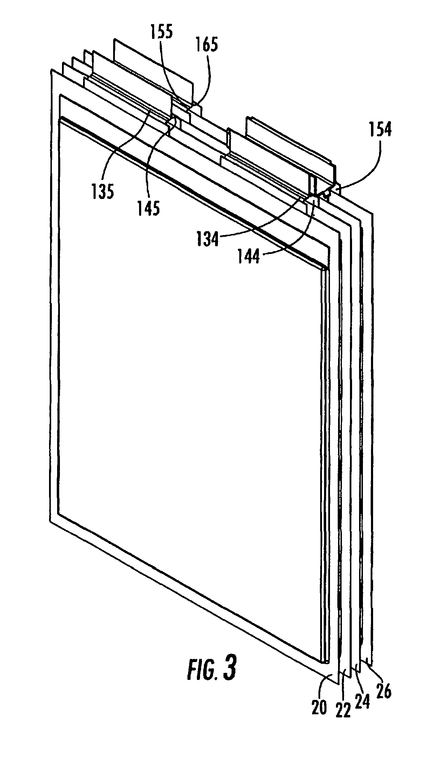

Referring to FIGS. 2, 3 and 4, in the illustrated exemplary embodiment, the battery cells 20-50 are lithium-ion battery cells. Further, the structure of the battery cells 20-50 are substantially similar to one another. Of course, in alternative embodiments, the battery cells could be other types of battery cells known to those skilled in the art.

The battery cell 20 includes a body portion 130, an extension portion 132 extending around a periphery of the body portion 130, and cell terminals 134, 135 extending outwardly from the extension portion 132. In one exemplary embodiment, the cell terminal 134 is a nickel-plated copper cell terminal and the cell terminal 135 is an aluminum cell terminal.

Further, the battery cell 22 includes a body portion 140, an extension portion 142 extending around a periphery of the body portion 140, and cell terminals 144, 145 extending outwardly from the extension portion 142. In one exemplary embodiment, the cell terminal 144 is a nickel-plated copper cell terminal and the cell terminal 145 is an aluminum cell terminal.

Also, the battery cell 24 includes a body portion 150, an extension portion 152 extending around a periphery of the body portion 150, and cell terminals 154, 155 extending outwardly from the extension portion 152. In one exemplary embodiment, the cell terminal 154 is a nickel-plated copper cell terminal and the cell terminal 155 is an aluminum cell terminal.

Further, the battery cell 26 includes a body portion 160, an extension portion 162 extending around a periphery of the body portion 160, and cell terminals 164, 165 extending outwardly from the extension portion 162. In one exemplary embodiment, the cell terminal 164 is a nickel-plated copper cell terminal and the cell terminal 165 is an aluminum cell terminal.

The frame members 60, 62, 64, 66, 68, 70, 72, 74, 76 are configured to be coupled together to enclose the battery cells 20-50 therebetween, and the frame members 60, 62 are configured to be coupled together and to hold the battery cells 20, 22 therebetween. Further, the frame members 62, 64 are configured to be coupled together and to hold the battery cells 24, 26 therebetween, and the frame members 64, 66 are configured to be coupled together and to hold battery cells 28, 30 therebetween. Also, the frame members 66, 68 are configured to be coupled together and to hold battery cells 32, 34 therebetween, and the frame members 68, 70 are configured to be coupled together and to hold battery cells 36, 38 therebetween. In addition, the frame members 70, 72 are configured to be coupled together and to hold battery cells 40, 42 therebetween, and the frame members 72, 74 are configured to be coupled together and to hold battery cells 44, 46 therebetween. Finally, the frame members 74, 76 are configured to be coupled together and to hold battery cells 48, 50 therebetween.

Referring to FIGS. 2, 4 and 5, the interconnect members 90, 92, 94, 96, 97, 98, 100, 102, 103 are provided to electrically couple cell terminals of the battery cells 20-50 in series with one another. Since the interconnect members 90, 92, 94, 96, 98, 100, 102 have a substantially similar configuration, only the structure of interconnect member 90 will be discussed in detail. The interconnect member 90 is substantially U-shaped and has outer nickel layers 180, 184 and a central copper layer 182. As illustrated, a surface of the nickel layer 184 is disposed adjacent to a first side of the exothermal reactive layer 112 also having a nickel layer. In an alternative embodiment, the surface of the nickel layer 184 is disposed adjacent to a first side of the exothermal reactive layer 112 having an aluminum layer. In one exemplary embodiment, a wall of the interconnect member 90 has a thickness in a range of 0.5-1.0 millimeters. As shown in FIG. 2, the interconnect members 97 and 103 have a different shape than the other interconnect members, and the interconnect members 97 and 103 are constructed of the same materials as the other interconnect members.

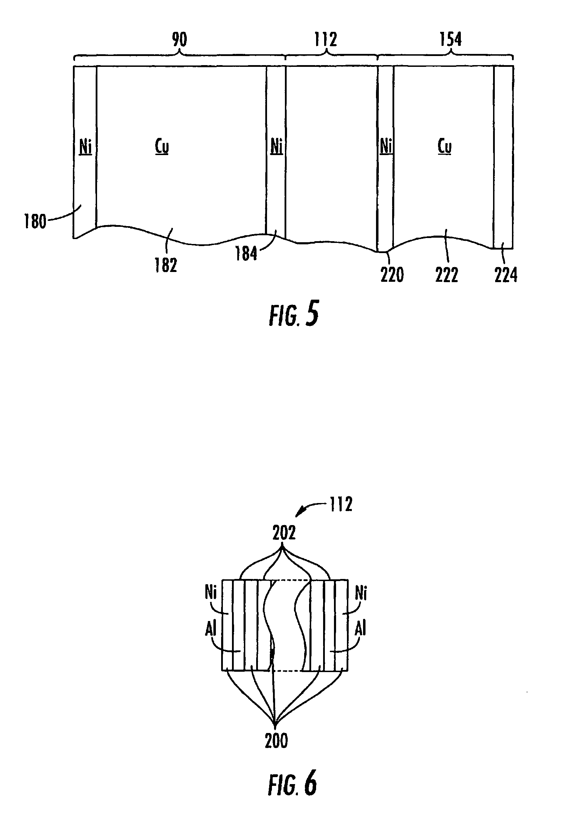

Referring to FIGS. 5, 6, and 13, the exothermal reactive layer 112 is provided to ignite in response to a laser beam contacting the exothermal reactive layer 112 in order to form a bonding joint 700 between the interconnect member 90 and the cell terminal 154. In the illustrated embodiment, the exothermal reactive layer 112 is constructed of a plurality of nickel layers 200 and a plurality of aluminum layers 202. Each nickel layer 200 has an adjacent aluminum layer 202 disposed thereon. The layers 200 and 202 are extremely thin and are deposited on each other utilizing a vapor deposition process or a magnetron sputtering process for example. Further, a total thickness of the exothermal reactive layer 112 is in a range of 40-200 microns. The exothermal reactive layer 112 has a first side disposed adjacent to a wall of the interconnect member 90 and a second side disposed adjacent to the cell terminal 154. Also, in one exemplary embodiment, the exothermal reactive layer 112 comprises a product named "NanoFoil" manufactured by Indium Corporation of America and is a separate component. In another alternative embodiment, the layer 112 is formed on a portion of the outer wall of the interconnect member 90 during manufacture of the interconnect member 90. In still another alternative embodiment, the layer 112 is formed on a portion of the cell terminal 154 during manufacture of the battery cell 24.

Referring to FIGS. 2 and 5, in the illustrated embodiment, the battery cells 20-50 have cell terminals with substantially similar structures. Only the cell terminal 154 of the battery cell 24 will be described in further detail. The cell terminal 154 has outer nickel layers 220, 224 and a central copper layer 222 disposed between the layers 220, 224. The nickel layer 220 is bonded (e.g., welded) to the exothermal reactive layer 112. In an alternative embodiment, a thin tin-alloy layer may be disposed between the cell terminal 154 and the exothermal reactive layer 112 to assist in bonding the cell terminal 154 to the interconnect layer 90. Further, a thin tin-alloy layer may be disposed between the interconnect member 90 and the exothermal reactive layer 112 to assist in bonding the cell terminal 154 to the interconnect layer 90. In the illustrated embodiment, a thickness of the cell terminal 154 is 0.2 millimeters. Of course, in alternative embodiments, a thickness of the cell terminal 154 could be 0.1-0.2 millimeters for example.

The exothermal reactive layer 112 is configured to ignite in response a laser beam contacting the layer 112 with a power density of 0.1 x 10⁸ Watts/cm² to 5.0 x 10⁸ Watts/cm². When ignited, the exothermal reactive layer 112 may burn at a temperature level of at least 1200 degrees Celsius to form a bonding joint (e.g., a weld joint) between the interconnect member 90 and the cell terminal 154.

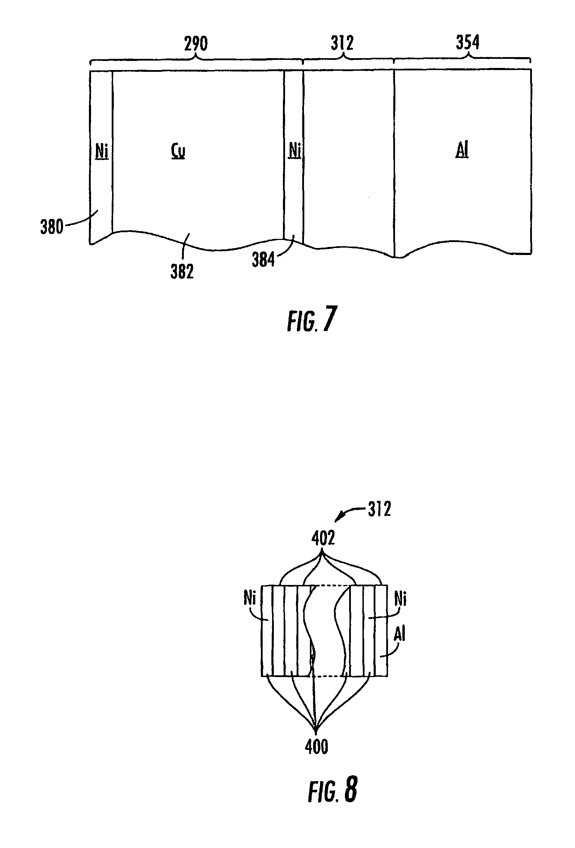

Referring to FIG. 7, an alternative configuration for the interconnect member, the exothermal reactive layer, and a cell terminal will be discussed. In particular, an interconnect member 290, an exothermal reactive layer 312, and a cell terminal 354 will be discussed. The interconnect member 290 is substantially U-shaped and has outer nickel layers 380, 384 and a central copper layer 382. As illustrated, a surface of the nickel layer 384 is disposed adjacent to a first side of the exothermal reactive layer 312. In one exemplary embodiment, a wall of the interconnect member 290 has a thickness in a range of 0.5-1.0 millimeters.

Referring to FIGS. 7, 8 and 14, the exothermal reactive layer 312 is provided to ignite in response to a laser beam contacting the exothermal reactive layer 312 in order to form a bonding joint 710 between the interconnect member 290 and the cell terminal 354. In the illustrated embodiment, the exothermal reactive layer 312 is constructed of a plurality of nickel layers 400 and a plurality of aluminum layers 402. Each nickel layer 400 has an adjacent aluminum layer 402 disposed of thereon. The layers 400 and 402 are extremely thin and are deposited on each other utilizing a vapor deposition process or a magnetron sputtering process. Further, a thickness of the exothermal reactive layer 312 is in a range of 40-200 microns. The exothermal reactive layer 312 has a first side disposed adjacent to a wall of the interconnect member 290 and a second side disposed adjacent to the cell terminal 354. Also, in one exemplary embodiment, the exothermal reactive layer 412 comprises a product named "NanoFoil" manufactured by Indium Corporation of America and is a separate component. In another alternative embodiment, the layer 312 is formed on a portion of the outer wall of the interconnect member 290 during manufacture of the interconnect member 290. In still another alternative embodiment, the layer 312 is formed on a portion of the cell terminal 354 during manufacture of an associated battery cell.

The cell terminal 354 is constructed of aluminum and is bonded with an aluminum layer of the exothermal reactive layer 312. In the illustrated embodiment, a thickness of the cell terminal 354 is 0.2 millimeters. Of course, in an alternative embodiment, a thickness of the cell terminal 354 is 0.1-0.2 millimeters.

The exothermal reactive layer 312 is configured to ignite in response a laser beam contacting the layer 312 with a power density of 0.1 x 10⁸ Watts/cm² to 5.0 x 10⁸ Watts/cm². When ignited, the exothermal reactive layer 312 may burn at a temperature level of at least 1200 degrees Celsius to form a bonding joint (e.g., a weld joint) between the interconnect member 290 and the cell terminal 354.

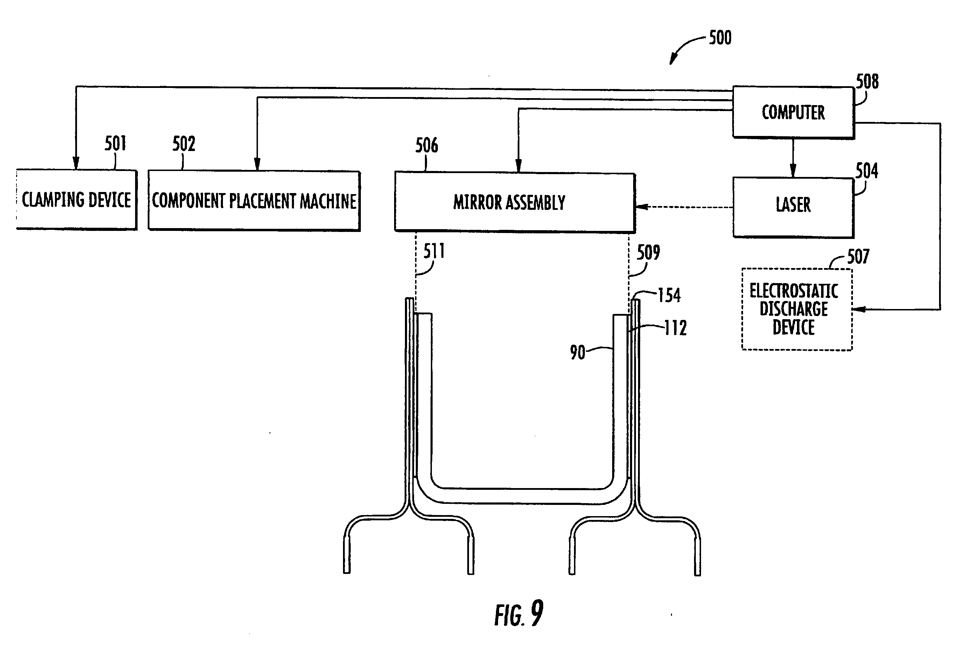

Referring to FIGS. 5 and 9, a system 500 for bonding the interconnect members to cell terminals of battery cells of the battery module 10 will now be described. Further, for purposes of simplicity, the system 500 will be explained utilizing the interconnect member 90, the exothermal reactive layer 112, and the battery cell terminal 154. However, it should be understood that the system 500 can be utilized to weld a plurality of other interconnect members to cell terminals in the battery module 10 or in other battery modules. The system 500 includes a clamping device 501, a component placement machine 502, a laser 504, a mirror assembly 506, an optional electrostatic discharge device 507, and a computer 508.

The clamping device 501 is configured to clamp the interconnect member 90, the exothermal reactive layer 112, and the cell terminal 154 together, in response to a control signal from the computer 508. The clamping device 501 clamps the interconnect member 90, the exothermal reactive layer 112, and the cell terminal 154 together when the exothermal reactive layer 112 is ignited to form the bonding joint. In one exemplary embodiment, the clamping device 501 has clamping members 580, 581 and an actuator that moves the members 580, 581 toward one another to apply a clamping force of 40-60 psi to the combination of the interconnect member 90, the exothermal reactive layer 112, and the cell terminal 154 disposed between the clamping members 580, 581, in response to a control signal from the computer 508. After the bonding joint is formed, the actuator moves the clamping members 580, 581 away from one another to release the combination of the interconnect member 90, the exothermal reactive layer 112, and the cell terminal 154, in response to another control signal from the computer 508.

In the illustrated embodiment, the component placement machine 502 is configured to dispose the exothermal reactive layer 112 between the interconnect member 90 and the cell terminal 154. In an alternative embodiment, the component placement machine 502 is configured to dispose an interconnect member having an exothermal reactive layer previously disposed thereon adjacent to a cell terminal of the battery cell. In still another alternative embodiment, the component placement machine 502 is configured to dispose an interconnect member adjacent to a cell terminal of a battery cell having an exothermal reactive layer previously disposed thereon. The component placement machine 502 is operably coupled to the computer 508 and performs tasks based on control signals received from the computer 508. In one exemplary embodiment, the component placement machine 502 is a robotic placement machine.

The laser 504 is configured to iteratively emit a laser beam for a predetermined amount of time in response to control signals from the computer 508. In the illustrated embodiment, the laser 504 emits a laser beam toward the mirror assembly 506 for less than or equal to 0.1 milliseconds. In an alternative embodiment, the laser 504 can be a yttrium aluminum garnet (YAG) laser, a CO₂ laser, a fiber laser, or a disc laser for example.

The mirror assembly 506 is configured to receive a laser beam from the laser 504 and to direct the laser beam toward a portion of an exothermal reactive layer. In particular, the mirror assembly 506 directs laser beams to predetermined locations based on control signals from the computer 508. As shown, the mirror assembly 506 directs the laser beam 509 toward the exothermal reactive layer 112 to ignite the layer 112 for forming a bonding joint 700 between the interconnect member 90 and the cell terminal 154. The laser beam 509 has a power density of 0.1 x 10⁸ Watts/cm² to 5.0 x 10⁸ Watts/cm² at the exothermal reactive layer 112. Further, the mirror assembly 506 can direct a second laser beam 511 towards another exothermal reactive layer to ignite the exothermal reactive layer 112. In one exemplary embodiment, the mirror assembly 506 is a galvanic mirror assembly. In an alternative embodiment, the mirror assembly 506 is a scanning mirror assembly.

The electrostatic discharge device 507 may be optionally utilized instead of the laser 504 and the mirror assembly 506 to ignite the exothermal reactive layer 112. In particular, the electrostatic discharge device 507 emits an electrical spark or discharge in response to a control signal from the computer 508 to ignite the exothermal reactive layer 112.

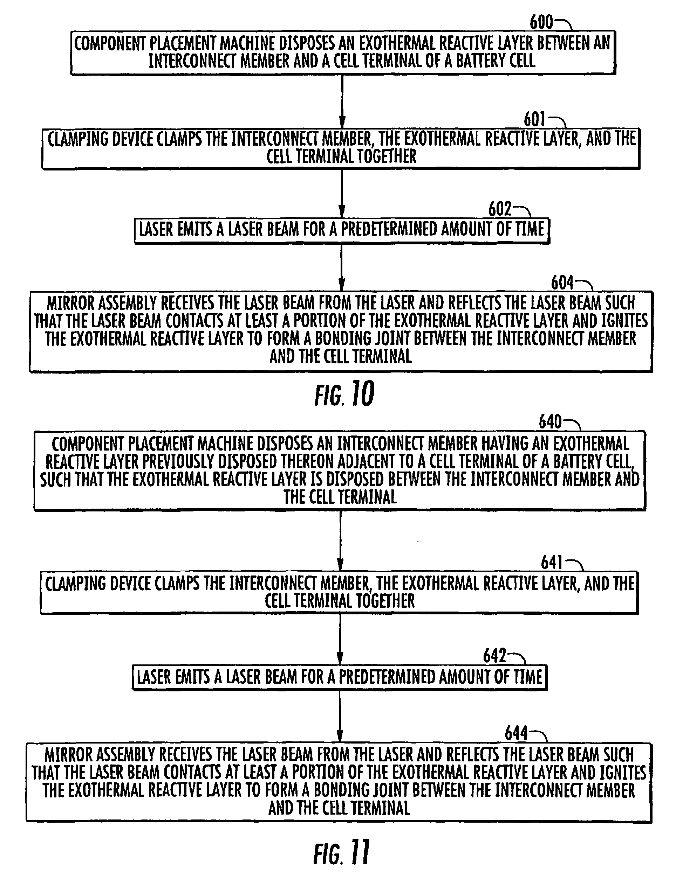

Referring to FIGS. 9 and 10, a flowchart of a method for bonding a cell terminal of the battery to an interconnect member in accordance with another exemplary embodiment will be explained. It should be understood that the following method can be iteratively performed to bond a plurality of cell terminals to associated interconnect members. During the explanation of the following method, it is assumed that the exothermal reactive layer 112 is a separate distinct component.

At step 600, the component placement machine 502 disposes the exothermal reactive layer 112 between the interconnect member 90 and the cell terminal 154 of the battery cell 24, in response to receiving control signals from the computer 508.

At step 601, the clamping device 501 clamps the interconnect member 90, the exothermal reactive layer 112, and the cell terminal 154 together in response to a control signal from the computer 508.

At step 602, the laser 504 emits a laser beam 509 for a predetermined amount of time in response to receiving a control signal from the computer 508.

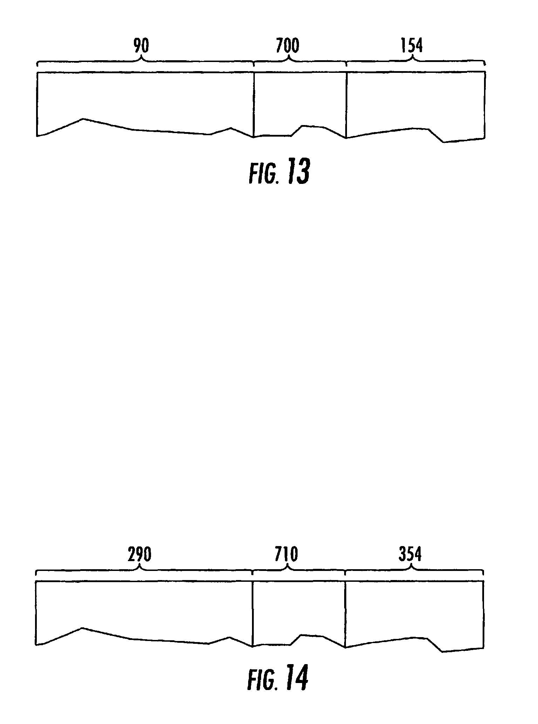

At step 604, the mirror assembly 506 receives the laser beam 509 from the laser 504 and reflects the laser beam 509 such that the laser beam 509 contacts at least a portion of the exothermal reactive layer 112 and ignites the exothermal reactive layer 112 to form a bonding joint 700, shown in FIG. 13, between the interconnect member 90 and the cell terminal 154. The mirror assembly 506 reflects the laser beam 509 toward the portion of the exothermal reactive layer 112 in response to receiving a control signal from the computer 508.

Referring to FIGS. 9 and 11, a flowchart of a method for bonding a cell terminal of the battery to an interconnect member in accordance with another exemplary embodiment will be explained. It should be understood that the following method can be iteratively performed to bond a plurality of cell terminals to associated interconnect members. During the explanation of the following method, it is assumed that the exothermal reactive layer 112 is previously formed on an outer surface of the interconnect member 90 utilizing a vapor deposition method or a magnetron sputtering method for example.

At step 640, the component placement machine 502 disposes the interconnect member 90 having the exothermal reactive layer 112 previously disposed thereon adjacent to the cell terminal 154 of the battery cell 24, in response to receiving control signals from the computer 508, such that the exothermal reactive layer 112 is disposed between the interconnect member 90 and the cell terminal 154.

At step 641, the clamping device 501 clamps the interconnect member 90, the exothermal reactive layer 112, and the cell terminal 154 together in response to a control signal from the computer 508.

At step 642, the laser 504 emits the laser beam 509 for a predetermined amount of time in response to control signal from the computer 508.

At step 644, the mirror assembly 506 receives the laser beam 509 from the laser 504 and reflects the laser beam 509 such that the laser beam 509 contacts at least a portion of the exothermal reactive layer 112 in response to receiving a control signal from the computer 508, and ignites the exothermal reactive layer 112 to form a bonding joint between the interconnect member 90 and the cell terminal 154.

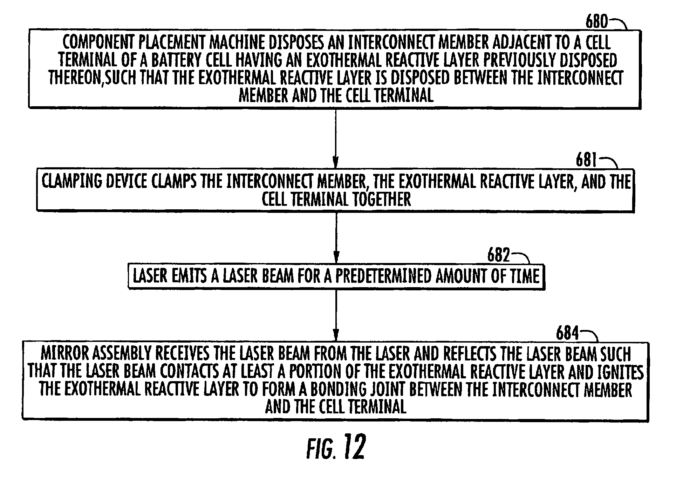

Referring to FIGS. 9 and 12, a flowchart of a method for bonding a cell terminal of the battery to an interconnect member in accordance with another exemplary embodiment will be explained. It should be understood that the following method can be iteratively performed to bond a plurality of cell terminals to associated interconnect members. During the explanation of the following method, it is assumed that the exothermal reactive layer 112 is previously formed on a surface of the cell tab 112 utilizing a vapor deposition method or a magnetron sputtering method for example.

At step 680, the component placement machine 502 disposes the interconnect member 90 adjacent to the cell terminal 154 of the battery cell 24 having the exothermal reactive layer 112 previously disposed thereon, in response to receiving control signals from the computer 508, such that the exothermal reactive layer 112 is disposed between the interconnect member 90 and the cell terminal 154.

At step 681, the clamping device 501 clamps the interconnect member 90, the exothermal reactive layer 112, and the cell terminal 154 together in response to a control signal from the computer 508.

At step 682, the laser 504 emits a laser beam 509 for a predetermined amount of time in response to receiving a control signal from the computer 508.

At step 684, the mirror assembly 506 receives the laser beam 509 from the laser 504 and reflects the laser beam 509 such that the laser beam 509 contacts at least a portion of the exothermal reactive layer 112 in response to receiving a control signal from the computer 508, and ignites the exothermal reactive layer 112 to form a bonding joint between the interconnect member 90 and the cell terminal 112.

The battery module 10 and the methods disclosed herein provide substantial advantages over other methods. In particular, the battery module 10 and methods provide a technical effect of utilizing exothermal reactive layers that are ignited utilizing a laser beam during manufacture of the module 10 to bond cell terminals of the battery cells to interconnect members extremely quickly (e.g., less than 0.5 seconds).

While the invention has been described in detail in connection with only a limited number of embodiments, it should be readily understood that the invention is not limited to such disclosed embodiments. Additionally, while various embodiments of the invention have been described, it is to be understood that aspects of the invention may include only some of the described embodiments. Accordingly, the invention is not to be seen as limited by the foregoing description.

## Claims

1. A battery module, comprising:
a battery cell having a cell terminal;
an exothermal reactive layer having first and second sides, the first side being disposed adjacent to the cell terminal; and
an interconnect member disposed adjacent to the second side of the exothermal reactive layer, the exothermal reactive layer is configured to ignite to form a bonding joint between the interconnect member and the cell terminal in response to a laser beam contacting at least a portion of the exothermal reactive layer.

2. The battery module of claim 1, wherein the exothermal reactive layer comprises a plurality of aluminum layers and a plurality of nickel layers.

3. The battery module of claim 1, wherein the first side of the exothermal reactive cell is an aluminum layer of the plurality of aluminum layers, and the cell terminal is an aluminum cell terminal.

4. The battery module of claim 3, wherein the second side of the exothermal reactive layer is a nickel layer of the plurality of nickel layers, and the interconnect member is a nickel- plated copper interconnect member.

5. The battery module of claim 1, wherein the first side of the exothermal reactive layer is a nickel layer of the plurality of nickel layers, and the cell terminal is nickel-plated copper cell terminal.

6. The battery module of claim 5, wherein the second side of the exothermal reactive layer is another nickel layer of the plurality of nickel layers, and the interconnect member is a nickel-plated copper interconnect member.

7. The battery module of claim 1, wherein a thickness of the exothermal reactive layer is 40-200 microns.

8. A method for bonding a cell terminal of a battery to an interconnect member, comprising:
disposing an exothermal reactive layer between the interconnect member and the cell terminal of the battery cell, utilizing a component placement machine; and
emitting a laser beam from a laser for a predetermined amount of time that contacts at least a portion of the exothermal reactive layer and ignites the exothermal reactive layer to form a bonding joint between the interconnect member and the cell terminal.

9. The method of claim 8, wherein the laser beam has a power density of 0.1 x 10⁸ Watts/cm² to 5.0 x 10⁸ Watts/cm² at the portion of the exothermal reactive layer.

10. The method of claim 8, wherein the exothermal reactive layer comprises a plurality of aluminum layers and a plurality of nickel layers.

11. The method of claim 8, wherein a thickness of the exothermal reactive layer is 40-200 microns.

12. A method for bonding a cell terminal of a battery to an interconnect member, comprising:
disposing the interconnect member having an exothermal reactive layer previously disposed thereon adjacent to the cell terminal utilizing a component placement machine;
emitting a laser beam from a laser for a predetermined amount of time that contacts at least a portion of the exothermal reactive layer and ignites the exothermal reactive layer to form a bonding joint between the interconnect member and the cell terminal.

13. The method of claim 12, wherein the laser beam has a power density of 0.1 x 10⁸ Watts/cm² to 5.0 x 10⁸ Watts/cm² at the portion of the exothermal reactive layer.

14. The method of claim 12, wherein the exothermal reactive layer comprises a plurality of aluminum layers and a plurality of nickel layers.

15. The method of claim 12, wherein a thickness of the exothermal reactive layer is 40-200 microns.

16. The method of claim 12, wherein the predetermined amount of time is less than 0.1 milliseconds.

17. A method for bonding a cell terminal of a battery to an interconnect member, comprising:
disposing the cell terminal having an exothermal reactive layer previously disposed thereon adjacent to the interconnect layer utilizing a component placement machine; and
emitting a laser beam from a laser for a predetermined amount of time that contacts at least a portion of the exothermal reactive layer and ignites the exothermal reactive layer to form a bonding joint between the interconnect member and the cell terminal.

18. The method of claim 17, wherein the laser beam has at least 10⁸ Watts/cm² at the portion of the exothermal reactive layer.

19. The method of claim 17, wherein the exothermal reactive layer comprises a plurality of aluminum layers and a plurality of nickel layers.

20. The method of claim 17, wherein a thickness of the exothermal reactive layer is 40-200 microns.

## Patentansprüche

1. Batteriemodul, mit:
einer Batteriezelle mit einem Zellanschluss;
einer exotherm reaktiven Schicht mit einer ersten und einer zweiten Seite, wobei die erste Seite angrenzend an den Zellanschluss angeordnet ist; und
einem Verbindungselement, das angrenzend an die zweite Seite der exotherm reaktiven Schicht angeordnet ist, wobei die exotherm reaktive Schicht ausgestaltet ist, sich zu entzünden, um eine Bond-Verbindung zwischen dem Verbindungselement und dem Zellanschluss als Reaktion auf einen Laserstrahl, der mit zumindest einen Abschnitt der exotherm reaktiven Schicht in Kontakt kommt, auszubilden.

2. Batteriemodul nach Anspruch 1, wobei
die exotherm reaktive Schicht mehrere Aluminiumschichten und mehrere Nickelschichten aufweist.

3. Batteriemodul nach Anspruch 1, wobei
die erste Seite der exotherm reaktiven Zelle eine Aluminiumschicht der mehreren Aluminiumschichten ist und der Zellanschluss ein Aluminiumzellanschluss ist.

4. Batteriemodul nach Anspruch 3, wobei
die zweite Seite der exotherm reaktiven Schicht eine Nickelschicht der mehreren Nickelschichten ist und das Verbindungselement ein vernickeltes Kupferverbindungselement ist.

5. Batteriemodul nach Anspruch 1, wobei
die erste Seite der exotherm reaktiven Schicht eine Nickelschicht der mehreren Nickelschichten ist und der Zellanschluss ein vernickelter Kupferzellanschluss ist.

6. Batteriemodul nach Anspruch 5, wobei
die zweite Seite der exotherm reaktiven Schicht eine andere Nickelschicht der mehreren Nickelschichten ist und das Verbindungselement ein vernickeltes Kupferverbindungselement ist.

7. Batteriemodul nach Anspruch 1, wobei
die Dicke der exotherm reaktiven Schicht 40 bis 200 Mikrometer beträgt.

8. Verfahren zum Bonden eines Zellanschlusses einer Batterie an ein Verbindungselement, aufweisend:
Anordnen einer exotherm reaktiven Schicht zwischen dem Verbindungselement und dem Zellanschluss der Batteriezelle, wobei eine Komponenten-Positionierungsmaschine verwendet wird; und
Emittieren eines Laserstrahls aus einem Laser für eine vorbestimmte Zeitdauer, der mit zumindest einem Abschnitt der exotherm reaktiven Schicht in Kontakt kommt und die exotherm reaktive Schicht entzündet, um eine Bond-Verbindung zwischen dem Verbindungselement und dem Zellanschluss auszubilden.

9. Verfahren nach Anspruch 8, wobei
der Laserstrahl eine Leistungsdichte von 0,1 x 10⁸ Watt/cm² bis 5,0 x 10² Watt/cm² auf dem Abschnitt der exotherm reaktiven Schicht aufweist.

10. Verfahren nach Anspruch 8, wobei
die exotherm reaktive Schicht mehrere Aluminiumschichten und mehrere Nickelschichten aufweist.

11. Verfahren nach Anspruch 8, wobei
eine Dicke der exotherm reaktiven Schicht 40 bis 200 Mikrometer beträgt.

12. Verfahren zum Bonden eines Zellanschlusses einer Batterie an ein Verbindungselement, aufweisend:
Anordnen des Verbindungselements, das eine zuvor darauf angeordnete exotherm reaktive Schicht aufweist, angrenzend an den Zellanschluss unter Verwendung einer Komponenten-Positionierungsmaschine;
Emittieren eines Laserstrahls aus einem Laser für eine vorbestimmte Zeitdauer, der mit zumindest einem Abschnitt der exotherm reaktiven Schicht in Kontakt kommt und die exotherm reaktive Schicht entzündet, um eine Bond-Verbindung zwischen dem Verbindungselement und dem Zellanschluss auszubilden.

13. Verfahren nach Anspruch 12, wobei
der Laserstrahl eine Leistungsdichte von 0,1 x 10⁸ Watt/cm² bis 5,0 x 10⁸ Watt/cm² auf dem Abschnitt der exotherm reaktiven Schicht aufweist.

14. Verfahren nach Anspruch 12, wobei
die exotherm reaktive Schicht mehrere Aluminiumschichten und mehrere Nickelschichten aufweist.

15. Verfahren nach Anspruch 12, wobei
eine Dicke der exotherm reaktiven Schicht 40 bis 200 Mikrometer beträgt.

16. Verfahren nach Anspruch 12, wobei
die vorbestimmte Zeitdauer weniger als 0,1 Millisekunden beträgt.

17. Verfahren zum Bonden eines Zellanschlusses einer Batterie an ein Verbindungselement, aufweisend:
Anordnen des Zellanschlusses, der eine zuvor darauf angeordnete exotherm reaktive Schicht aufweist, angrenzend an die Verbindungsschicht unter Verwendung einer Komponenten-Positionierungsmaschine; und
Emittieren eines Laserstrahls aus einem Laser für eine vorbestimmte Zeitdauer, der mit zumindest einen Abschnitt der exotherm reaktiven Schicht in Kontakt kommt und die exotherm reaktive Schicht entzündet, um eine Bond-Verbindung zwischen dem Verbindungselement und dem Zellanschluss auszubilden.

18. Verfahren nach Anspruch 17, wobei
der Laserstrahl mindestens 10⁸ Watt/cm² auf dem Abschnitt der exotherm reaktiven Schicht aufweist.

19. Verfahren nach Anspruch 17, wobei
die exotherm reaktive Schicht mehrere Aluminiumschichten und mehrere Nickelschichten aufweist.

20. Verfahren nach Anspruch 17, wobei
eine Dicke der exotherm reaktiven Schicht 40 bis 200 Mikrometer beträgt.

## Revendications

1. Module de batterie, comprenant :
une cellule de batterie ayant une borne de cellule ;
une couche réactive exothermique ayant une première et une seconde face, la première face étant adjacente à la borne de cellule ; et
un élément d'interconnexion adjacent à la seconde face de la couche réactive exothermique, la couche réactive exothermique est conçue pour s'enflammer afin de former un joint de liaison entre l'élément d'interconnexion et la borne de cellule en réponse à un faisceau laser entrant en contact avec au moins une partie de la couche réactive exothermique.

2. Module de batterie selon la revendication 1, dans lequel la couche réactive exothermique comprend une pluralité de couches d'aluminium et une pluralité de couches de nickel.

3. Module de batterie selon la revendication 1, dans lequel la première face de la cellule réactive exothermique est une couche d'aluminium de la pluralité de couches d'aluminium, et la borne de cellule est une borne de cellule en aluminium.

4. Module de batterie selon la revendication 3, dans lequel la seconde face de la couche réactive exothermique est une couche de nickel de la pluralité de couches de nickel, et l'élément d'interconnexion est un élément d'interconnexion en cuivre nickelé.

5. Module de batterie selon la revendication 1, dans lequel la première face de la couche réactive exothermique est une couche de nickel de la pluralité de couches de nickel, et la borne de cellule est une borne de cellule en cuivre nickelé.

6. Module de batterie selon la revendication 5, dans lequel la seconde face de la couche réactive exothermique est une autre couche de nickel de la pluralité de couches de nickel, et l'élément d'interconnexion est un élément d'interconnexion en cuivre nickelé.

7. Module de batterie selon la revendication 1, dans lequel l'épaisseur de la couche réactive exothermique est de 40 à 200 microns.

8. Procédé de liaison d'une borne de cellule d'une batterie à un élément d'interconnexion, comprenant :
le dépôt d'une couche réactive exothermique entre l'élément d'interconnexion et la borne de cellule de la cellule de batterie, en utilisant une machine de placement de composant, et
l'émission d'un faisceau laser à partir d'un laser pendant une durée prédéterminée qui entre en contact avec au moins une partie de la couche réactive exothermique et enflamme la couche réactive exothermique afin de former un joint de liaison entre l'élément d'interconnexion et la borne de cellule.

9. Procédé selon la revendication 8, dans lequel le faisceau laser présente une densité de puissance de 0,1 x 10⁸ watts/cm² à 5,0 x 10⁸ watts/cm² sur la partie de la couche réactive exothermique.

10. Procédé selon la revendication 8, dans lequel la couche réactive exothermique comprend une pluralité de couches d'aluminium et une pluralité de couches de nickel.

11. Procédé selon la revendication 8, dans lequel l'épaisseur de la couche réactive exothermique est de 40 à 200 microns.

12. Procédé de liaison d'une borne de cellule d'une batterie à un élément d'interconnexion, comprenant :
le dépôt de l'élément d'interconnexion ayant une couche réactive exothermique préalablement déposée dessus adjacent à la borne de cellule en utilisant une machine de placement de composant,
l'émission d'un faisceau laser à partir d'un laser pendant une durée prédéterminée qui entre en contact avec au moins une partie de la couche réactive exothermique et enflamme la couche réactive exothermique afin de former un joint de liaison entre l'élément d'interconnexion et la borne de cellule.

13. Procédé selon la revendication 12, dans lequel le faisceau laser présente une densité de puissance de 0,1 x 10⁸ watts/cm² à 5,0 x 10⁸ watts/cm² sur la partie de la couche réactive exothermique.

14. Procédé selon la revendication 12, dans lequel la couche réactive exothermique comprend une pluralité de couches d'aluminium et une pluralité de couches de nickel.

15. Procédé selon la revendication 12, dans lequel l'épaisseur de la couche réactive exothermique est de 40 à 200 microns.

16. Procédé selon la revendication 12, dans lequel la durée prédéterminée est inférieure à 0,1 milliseconde.

17. Procédé de liaison d'une borne de cellule d'une batterie à un élément d'interconnexion, comprenant :
le dépôt de la borne de cellule ayant une couche réactive exothermique préalablement déposée dessus adjacente à la couche d'interconnexion en utilisant une machine de placement de composant, et
l'émission d'un faisceau laser à partir d'un laser pendant une durée prédéterminée qui entre en contact avec au moins une partie de la couche réactive exothermique et enflamme la couche réactive exothermique afin de former un joint de liaison entre l'élément d'interconnexion et la borne de cellule.

18. Procédé selon la revendication 17, dans lequel le faisceau laser a au moins 10⁸ watts/cm² sur la partie de la couche réactive exothermique.

19. Procédé selon la revendication 17, dans lequel la couche réactive exothermique comprend une pluralité de couches d'aluminium et une pluralité de couches de nickel.

20. Procédé selon la revendication 17, dans lequel l'épaisseur de la couche réactive exothermique est de 40 à 200 microns.
